# EUROPEAN PATENT APPLICATION

(11) **EP 4 561 194 A1**
(43) Date of publication of application: **28.05.2025**
(21) Application number: 22951466.6
(22) Date of filing: 19.07.2022
(51) Int. Cl.: H04W 52/14

(54) **POWER HEADROOM REPORTING METHOD BASED ON MULTI-PANEL TRANSMISSION, AND APPARATUS**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/106585
(87) International publication number: WO 2024/016188

(57) **Abstract**

Disclosed in embodiments of the present disclosure is power headroom (PH) reporting based on multi-panel transmission, which can be applied to the technical field of communications. A method performed by a multi-panel terminal device comprises: when the terminal device actually sends a PUSCH on a first sending time slot corresponding to a PUSCH carrying MAC CE power headroom report (PHR) reporting, or on a time slot satisfying timeline requirements, and the PUSCH is configured or scheduled to perform STxMP, the terminal device may calculate and report a PHR on the basis of a maximum power configuration of the terminal device and according to actual PH. Therefore, a network device can determine the actual PH of each panel according to the PHR reported by the multi-panel terminal device, so as to perform accurate resource scheduling on each panel, thereby ensuring the reliability of uplink transmission.

## Description

### TECHNICAL FIELD

The present disclosure relates to a field of communication technology, and specifically to a power headroom reporting method and apparatus based on a multi-panel transmission.

### BACKGROUND

In a multi-transmission and receiving point (Multi-TRP) scenario, the R18 standard considers using a terminal with multiple panels for simultaneous uplink transmission to improve the throughput and reliability of the uplink transmission. For the uplink transmission, the terminal needs to measure and report a power headroom report (PHR) to a network device, so that the network device can schedule resources according to the PHR. Therefore, how the terminal with multiple panels reports the PHR is a problem to be solved urgently.

### SUMMARY

Embodiments of the present disclosure provide a power headroom reporting method and apparatus based on a multi-panel transmission.

According to a first aspect of the embodiments of the present disclosure, a power headroom reporting method based on a multi-panel transmission is provided, performed by a terminal having multiple panels, including: calculating and reporting a power headroom report (PHR) according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

In the present disclosure, in a case where the terminal actually sends the PUSCH on the first transmission time slot corresponding to the PUSCH for carrying the MACCE PHR, or on the time slot that meets the timeline requirement, and the PUSCH is configured or scheduled for the STxMP, the terminal can calculate and report the PHR according to the actual PH and based on the maximum power configuration of the terminal. Therefore, the network device can determine the PH of each panel based on the PHR reported by the terminal having the multiple panels, thereby accurately scheduling resources for each panel and ensuring the reliability of uplink transmission.

According to a second aspect of the embodiments of the present disclosure, a power headroom reporting method based on a multi-panel transmission is provided, performed by a network device, including: determining that a power headroom report (PHR) reported by a terminal is calculated according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

In the present disclosure, in a case where the terminal actually sends the PUSCH on the first transmission time slot corresponding to the PUSCH for carrying the MACCE PHR, or on the time slot that meets the timeline requirement, and the PUSCH is configured or scheduled for the STxMP, the network device can determine that the PHR reported by the terminal is calculated and reported according to the actual PH and based on the maximum power configuration of the terminal. Therefore, the network device can determine the PH of each panel based on the PHR reported by the terminal having the multiple panels, thereby accurately scheduling resources for each panel and ensuring the reliability of uplink transmission.

According to a third aspect of the embodiments of the present disclosure, a communication apparatus is provided. The communication apparatus is applicable to a terminal having multiple panels. The communication apparatus may include a processing module, configured to calculate and report a power headroom report (PHR) according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

According to a fourth aspect of the embodiments of the present disclosure, a communication apparatus is provided. The communication apparatus is applicable to a network device. The communication apparatus may include a processing module, configured to determine that a power headroom report (PHR) reported by a terminal is calculated according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

According to a fifth aspect of the embodiments of the present disclosure, a communication apparatus including a processor and a memory for storing a computer program is provided. When the computer program stored in a memory is executed by the processor, the communication apparatus is caused to implement the method described in the first aspect.

According to a sixth aspect of the embodiments of the present disclosure, a communication apparatus including a processor and a memory for storing a computer program is provided. When the computer program stored in a memory is executed by the processor, the communication apparatus is caused to implement the method described in the second aspect.

According to a seventh aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the first aspect.

According to an eighth aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the second aspect.

According to a ninth aspect of the embodiments of the present disclosure, a power headroom reporting system based on a multi-panel transmission is provided, in which the system includes the communication apparatus described in the third aspect and the communication apparatus described in the fourth aspect, or the communication apparatus described in the fifth aspect and the communication apparatus described in the sixth aspect, or the communication apparatus described in the seventh aspect and the communication apparatus described in the eighth aspect.

According to a tenth aspect of the embodiments of the present disclosure, a computer-readable storage medium for storing instructions used by the terminal is provided. When the instructions are executed, the terminal is caused to implement the method described in the first aspect.

According to an eleventh aspect of the embodiments of the present disclosure, a computer-readable storage medium for storing instructions used by the network device is provided. When the instructions are executed, the network device is caused to implement the method described in the second aspect.

According to a twelve aspect of the embodiments of the present disclosure, a computer program product including a computer program is provided. When the computer program is running on a computer, the computer is caused to perform the method described in the first aspect.

According to a thirteenth aspect of the embodiments of the present disclosure, a computer program product including a computer program is provided. When the computer program is running on a computer, the computer is caused to perform the method described in the second aspect.

According to a fourteenth aspect of the embodiments of the present disclosure, a chip system is provided, including at least one processor and an interface configured to support the terminal to perform the functions in the first aspect, for example, at least one of determining or processing data and information in the above method. In one possible design, the chip system also includes a memory for saving a computer program and data necessary for the terminal. The chip system may include a chip, or a chip and other discrete devices.

According to a fifteenth aspect of the embodiments of the present disclosure, a chip system is provided, including at least one processor and an interface configured to support the network device to perform the functions in the second aspect, for example, at least one of determining or processing data and information in the above method. In one possible design, the chip system also includes a memory for saving a computer program and data necessary for the network device. The chip system may include a chip, or a chip and other discrete devices.

According to a sixteenth aspect of the embodiments of the present disclosure, a computer program is provided. When the computer program is running on a computer, the computer is caused to implement the method described in the first aspect.

According to a seventeenth aspect of the embodiments of the present disclosure, a computer program is provided. When the computer program is running on a computer, the computer is caused to implement the method described in the second aspect.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure.
FIG. 2 is a flowchart of a power headroom reporting method based on a multi-panel transmission according to an embodiment of the present disclosure.
FIG. 3 is another flowchart of a power headroom reporting method based on a multi-panel transmission according to an embodiment of the present disclosure.
FIG. 4 is another flowchart of a power headroom reporting method based on a multi-panel transmission according to an embodiment of the present disclosure.
FIG. 5 is another flowchart of a power headroom reporting method based on a multi-panel transmission according to an embodiment of the present disclosure.
FIG. 6 is another flowchart of a power headroom reporting method based on a multi-panel transmission according to an embodiment of the present disclosure.
FIG. 7 is another flowchart of a power headroom reporting method based on a multi-panel transmission according to an embodiment of the present disclosure.
FIG. 8 is another flowchart of a power headroom reporting method based on a multi-panel transmission according to an embodiment of the present disclosure.
FIG. 9 is another flowchart of a power headroom reporting method based on a multi-panel transmission according to an embodiment of the present disclosure.
FIG. 10 is another flowchart of a power headroom reporting method based on a multi-panel transmission according to an embodiment of the present disclosure.
FIG. 11 is another flowchart of a power headroom reporting method based on a multi-panel transmission according to an embodiment of the present disclosure.
FIG. 12 is another flowchart of a power headroom reporting method based on a multi-panel transmission according to an embodiment of the present disclosure.
FIG. 13 is a block diagram of a communication apparatus according to an embodiment of the present disclosure.
FIG. 14 is another block diagram of a communication apparatus according to an embodiment of the present disclosure.
FIG. 15 is a block diagram of a chip according to an embodiment of the present disclosure.

### DETAILED DESCRIPTION

For ease of understanding, the terms involved in the disclosure are introduced firstly.

### 1. Power headroom report (PHR)

PHR reflects an available power of a terminal, that is, a power headroom. In the control of uplink transmission, it is required to measure and report the power headroom to the network device.Here, the multi-TRP uplink transmission is mainly related to a Type 1 power headroom report. The report includes the power headroom and a maximum transmit power Pcmax on a component carrier. The Pcmax is configured by the network to the terminal explicitly. When the network knows a modulation and coding scheme (MCS) at a time moment corresponding to the power headroom report and a resource size used by the terminal for transmission, the network can determine an effective combination of the MCS and the allocated resource size. When there is no actual PUSCH transmission, the terminal can also report the Type 1 power headroom.

An existing PHR measurement mechanism includes an actual PHR or a virtual PHR. When there is physical uplink shared channel (PUSCH) transmission, the terminal reports the actual PHR to the network device. If there is no PUSCH transmission, the terminal calculates a PHR according to a predefined PUSCH format and sends it to the network device, that is, reporting the virtual PHR. The network device will determine a bandwidth that the terminal can send and a transmission mode based on power difference information of the terminal.

### 2. Transmission and receiving point (TRP)

TRP is equivalent to a traditional base station, but in some cases, a cell may be covered by more than one TRP, for example jointly covered by multiple TRPs.

### 3. PUSCH

PUSCH is used to carry data from a transmission channel USCH. Sharing means that a same physical channel can be used by multiple terminals in a time division manner, or that the channel has a short duration.

### 4. Uplink simultaneous transmission of multiple panels (STxMP)

Utilizing cooperation between multiple panels to transmit/receive channels from multiple beams of multiple angles may overcome various occlusion or blocking effects better and ensure robustness of a link connection.

### 5. Media access control control element (MAC CE)

MAC CE is a way for the terminal and the network device to exchange control information, which is mainly about control information of a MAC layer.

In order to better understand a power headroom reporting method based on a multi-panel transmission in the embodiments of the present disclosure, a communication system to which the embodiments of the present disclosure is applicable is firstly described as follows.

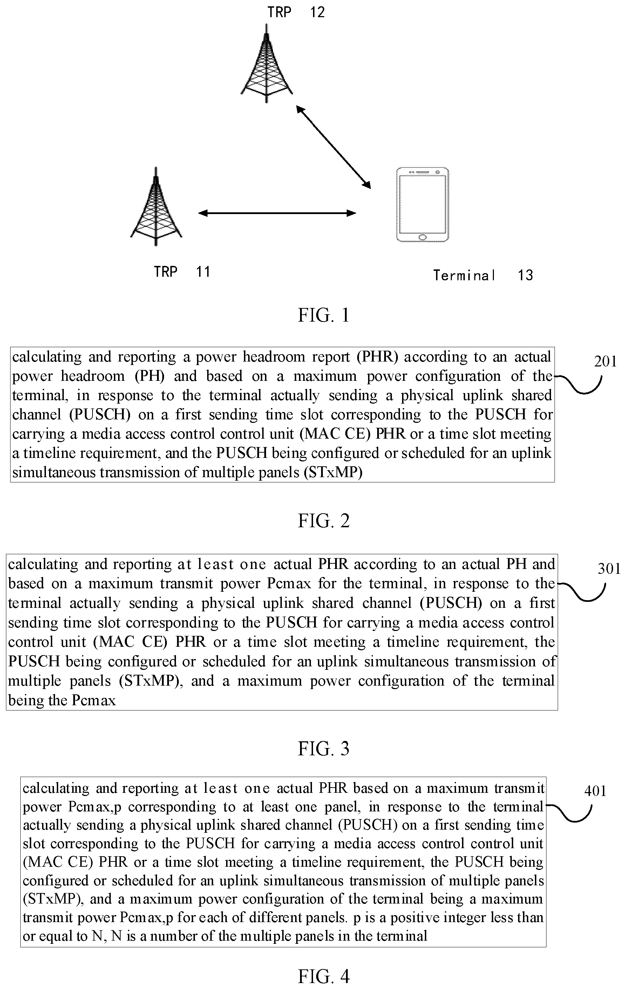

Please refer to FIG. 1, which is a schematic diagram of a communication system according to an embodiment of the present disclosure. The communication system may include, but is not limited to, one network device (such as TRP) and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including two TRPs, i.e., TRP11 and TRP12, and one terminal 13 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

Each of the TRP 11 and the TRP12 in the embodiments of the present disclosure is an entity on the network side for sending or receiving signals. For example, the TRP may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU. In the present disclosure, the TRP may be replaced with a remote radio head, or an antenna panel, or the like.

The terminal 13 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in autonomous driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

In the present disclosure, since each panel of the terminal has an independent power amplifier (PA) implementation structure, it can support an independent power control process. Therefore, a maximum transmit power Pcmax can be configured for the terminal, or a maximum transmit power Pcmax,p corresponding to each panel can be configured for each panel of the terminal. Thereafter, the terminal can determine a PHR based on the Pcmax of the terminal and/or the Pcmax,p corresponding to each panel of the terminal, and then the network device can determine a power headroom (PH) of the terminal based on the PHR, and schedule resources for each panel based on the PH, thus ensuring the reliability of uplink transmission.

It should be noted that in the present disclosure, a power headroom reporting method based on a multi-panel transmission provided in any embodiment can be executed alone, or can be executed together in combination with possible implementation methods in other embodiments, or can be executed together in combination with any technology solution in the related art.

Embodiments of the present disclosure will now be further described with reference to the accompanying drawings and specific implementations.

Reference will now be made in detail to illustrative embodiments, examples of which are illustrated in the accompanying drawings. When the following description refers to the accompanying drawings, the same numbers in different drawings represent the same or similar elements, unless otherwise specified. The implementations set forth in the following illustrative embodiments do not represent all implementations consistent with the present disclosure. Instead, they are merely examples of apparatuses and methods consistent with aspects of the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the present disclosure are also intended to include the plural form, unless the context clearly indicates other meaning. It should also be understood that the term "and/or" as used herein refers to any or all possible combinations of one or more associated listed items.

Depending on the context, the words "if" and "in response to" used here can be interpreted as "when", "while" or "in response to determining".

The embodiments of the present disclosure are described in detail below, examples of which are illustrated in the accompanying drawings, the same or similar reference numerals refer to the same or similar elements throughout. The embodiments described below with reference to the accompanying drawings are illustrative and intended to explain the present disclosure and are not to be construed as limitations of the present disclosure.

Referring to FIG. 2, FIG. 2 is a flowchart of a power headroom reporting method based on a multi-panel transmission according to an embodiment of the present disclosure. The method is performed by a terminal having multiple panels. As illustrated in FIG. 2, the method may include, but not limited to, the following step.

At step 201, a power headroom report (PHR) is calculated and reported according to an actual power headroom (PH) and based on a maximum power configuration of the terminal, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

The first sending time slot corresponding to the PUSCH for carrying the MAC CE PHR may be a sending time slot having the smallest time domain position in various sending time slots corresponding to the PUSCH for carrying the MAC CE PHR that is determined according to downlink control information (DCI). The time slot meeting the timeline requirement may be a time slot meeting the timeline requirement for PHR reporting determined by the terminal according to a protocol agreement or an indication of a network device.

In the present disclosure, when the terminal performs uplink transmission, in order to ensure the reliability of the uplink transmission, the terminal may report a PHR to the network device. When the terminal actually sends the PUSCH on the first sending time slot corresponding to the PUSCH for carrying the MAC CE PHR or actually sends the PUSCH on the time slot meeting the timeline requirement, it may be considered that the terminal has an actual PUSCH transmission, so that the PHR can be calculated and reported according to an actual PH.

Optionally, the terminal can calculate and report the PHR according to the actual PH and based on its maximum power configuration. Therefore, the network device can determine the power headroom of the terminal based on the PHR, and accurately determine a bandwidth that the panel of the terminal can send and a transmission mode in combination with the coding and modulation scheme of the terminal, thereby ensuring the reliability of the uplink transmission.

Optionally, the maximum power configuration of the terminal may include the maximum transmit power Pcmax for the terminal, or may be the maximum transmit power Pcmax,p for each of different panels, or may include both the Pcmax and the Pcmax,p, which is not limited in the present disclosure.

The PHR may include an actual PH value calculated based on the maximum transmit power and a power of the actually transmitted PUSCH.

Optionally, the terminal can calculate and report at least one PHR based on the maximum transmit power Pcmax for the terminal and according to the actual PH; or can calculate and report at least one PHR based on the maximum transmit powers Pcmax,p for different panels and according to the actual PH; or can calculate and report at least one PHR based on the Pcmax and the Pcmax,p and according to the actual PH, etc., which is not limited in the present disclosure.

In the present disclosure, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the uplink simultaneous transmission of multiple panels, the terminal can calculate the PHR according to the actual PH and based on the maximum power configuration of the terminal, and report the PHR when a PHR reporting condition is met.

In present disclosure, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the STxMP, the terminal can calculate and report the PHR according to the actual PH and based on the maximum power configuration of the terminal. Therefore, the network device can determine the PH of each panel based on the PHR reported by the terminal having the multiple panels, thereby accurately scheduling resources for each panel and ensuring the reliability of uplink transmission.

Referring to FIG. 3, FIG. 3 is a flowchart of a power headroom reporting method based on a multi-panel transmission according to an embodiment of the present disclosure. The method is performed by a terminal having multiple panels. As illustrated in FIG. 3, the method may include, but not limited to, the following step.

At step 301, at least one actual PHR is calculated and reported according to an actual PH and based on a maximum transmit power Pcmax for the terminal, in response to the terminal actually sending a physical uplink shared channel (PUSCH) on a first sending time slot corresponding to the PUSCH for carrying a media access control control unit (MAC CE) PHR or a time slot meeting a timeline requirement, the PUSCH being configured or scheduled for an uplink simultaneous transmission of multiple panels (STxMP), and a maximum power configuration of the terminal being the Pcmax.

In the present disclosure, when the maximum power configuration of the terminal is the Pcmax for the terminal, and the PUSCH is configured or scheduled for the STxMP, the terminal can perform power allocation of the Pcmax according to a preset power allocation rule, to determine a maximum transmit power corresponding to each panel.

Optionally, the terminal can perform power allocation of the Pcmax according to an average allocation rule to determine the maximum transmit power corresponding to each panel. For example, the Pcmax is 23 decibel relative to one milliwatt (dBm), and there are two panels in the terminal. According to the average allocation rule, it can be determined that the maximum transmit power corresponding to each panel is 20dBm.

Alternatively, the terminal can also perform power allocation of the Pcmax according to a dynamic allocation rule to determine the maximum transmit power corresponding to each panel. The dynamic allocation rule can be indicated by the network device or determined according to a protocol agreement. For example, when actual power output capabilities of the two panels of the terminal are different, panel#2 has a larger power amplifier and supports a higher actual transmit power. In this case, the allocation can be performed between the two panels according to a dynamic manner in consideration with PA capabilities. For example, the PA on panel #1 supports 23dBm, and the PA on panel #2 supports 26dBm, but the maximum transmit power of the terminal is configured to 26dBm. In this case, the allocation can be performed between the two panels according to an average manner in consideration with the transmit power. Alternatively, the allocation can be performed between the two panels according to a dynamic manner in consideration with PA capabilities. For example, the maximum transmit power of panel #2 accounts for 70% of the maximum transmit power of the terminal. In this case, if the Pcmax of the terminal is 26dBm, it can be determined according to the dynamic allocation rule that when panel#1 occupies 30%, the maximum transmit power corresponding to panel#1 is 21dBm, and the maximum transmit power corresponding to panel#2 is 24.5dBm.

Optionally, the terminal can calculate and report the actual PHR of a specified panel according to the Pcmax and the power allocation rule, in which the PHR is associated with a transmission occasion corresponding to a PUSCH transmission on the panel for which the PHR is calculated.

Optionally, the specified panel can be a panel under a predefined rule. For example, the predefined rule may be: a panel corresponding to a set of sounding reference signal (SRS) resources with a smaller set ID. That is, the terminal can calculate and report the actual PHR corresponding to the panel corresponding to the set of SRS resources with the smaller set ID according to the power allocation rule.

Alternatively, the specified panel can be a panel selected by the terminal. For example, the terminal can determine the maximum transmit power corresponding to each panel based on the Pcmax and the power allocation rule, calculate the actual PH corresponding to each panel, and select a calculation result corresponding to the panel with a relatively poor PH for reporting.

Optionally, the specified panel may also be determined by the terminal based on first indication information sent by the network device.

Alternatively, the terminal can also calculate and report actual PHRs of two panels according to the Pcmax and the power allocation rule, in which each PHR is associated with a transmission occasion corresponding to a PUSCH transmission on the panel for which the PHR is calculated.

For example, the terminal can determine the maximum transmit power corresponding to each panel based on the Pcmax and the power allocation rule, calculate the actual PH corresponding to each panel, and report the PHRs corresponding respectively to the two panels.

In the present disclosure, for the specific explanation of the PHR, reference can be made to detailed descriptions of any embodiment of the disclosure, which will not be described again here.

In the present disclosure, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the STxMP, the terminal can calculate and report at least one actual PHR based on the actual PH and the maximum transmit power Pcmax for the terminal. As a result, the network device can determine the PH of each panel based on the PHR reported by the terminal having the multiple panels, thereby accurately scheduling resources for each panel and ensuring the reliability of uplink transmission.

Referring to FIG. 4, FIG. 4 is a flowchart of a power headroom reporting method based on a multi-panel transmission according to an embodiment of the present disclosure. The method is performed by a terminal having multiple panels. As illustrated in FIG. 4, the method may include, but not limited to, the following step.

At step 401, at least one actual PHR is calculated and reported based on a maximum transmit power Pcmax,p corresponding to at least one panel, in response to the terminal actually sending a physical uplink shared channel (PUSCH) on a first sending time slot corresponding to the PUSCH for carrying a media access control control unit (MAC CE) PHR or a time slot meeting a timeline requirement, the PUSCH being configured or scheduled for an uplink simultaneous transmission of multiple panels (STxMP), and a maximum power configuration of the terminal being a maximum transmit power Pcmax,p for each of different panels. p is a positive integer less than or equal to N, N is a number of the multiple panels in the terminal.

In the present disclosure, when the maximum power configuration of the terminal includes the maximum transmit powers Pcmax,p for different panels, the PUSCH is configured or scheduled for the STxMP, and the terminal actually sends the PUSCH on the first sending time slot corresponding to the PUSCH for carrying the MAC CE PHR or the time slot meeting the timeline requirement, the terminal may calculate and report an actual PHR corresponding to at least one panel according to the Pcmax,p corresponding to the at least one panel.

Optionally, if the maximum power configuration of the terminal includes the maximum transmit powers Pcmax,p corresponding to different panels, the terminal may calculate and report an actual PHR corresponding to a specified panel according to a Pcmax,p corresponding to the specified panel. The PHR is associated with a transmission occasion corresponding to a PUSCH transmission on the panel for which the PHR is calculated.

Optionally, the terminal may determine a panel under a predefined rule as the specified panel. For example, the predefined rule may be: a panel corresponding to a set of sounding reference signal (SRS) resources with a smaller set ID. That is, the terminal can calculate and report the actual PHR corresponding to the panel based on the Pcmax,p corresponding to the panel corresponding to the set of SRS resources with the smaller set ID.

Optionally, the terminal may determine a panel selected by the terminal as the specified panel. For example, the terminal can determine the actual PH corresponding to each panel based on the maximum transmit power Pcmax,p corresponding to each panel, and select a calculation result corresponding to the panel with a relatively poor PH for reporting.

Alternatively, the terminal may determine the specified panel according to first indication information sent by the network device.

Optionally, the terminal may calculate and report the actual PHRs of two panels according to the maximum transmit powers Pcmax,p corresponding respectively to the two panels. Each PHR is associated with a transmission occasion corresponding to a PUSCH transmission on the panel for which the PHR is calculated.

For example, the terminal calculates PHR#1 based on Pcmax,p#1 corresponding to panel#1, and calculates PHR#2 based on Pcmax,p#2 corresponding to panel#2. PHR#1 is associated with the transmission occasion corresponding to the PUSCH transmission on panel#1, PHR#2 is associated with the transmission occasion corresponding to the PUSCH transmission on panel#2, and PHR#1 and PHR#2 are reported to the network device.

In the present disclosure, for the specific explanation of the PHR, reference can be made to detailed descriptions of any embodiment of the disclosure, which will not be described again here.

In the present disclosure, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the STxMP, the terminal can calculate and report at least one actual PHR based on the maximum transmit power Pcmax,p corresponding to the at least one panel. As a result, the network device can determine the PH of each panel based on the PHR reported by the terminal having the multiple panels, thereby accurately scheduling resources for each panel and ensuring the reliability of uplink transmission.

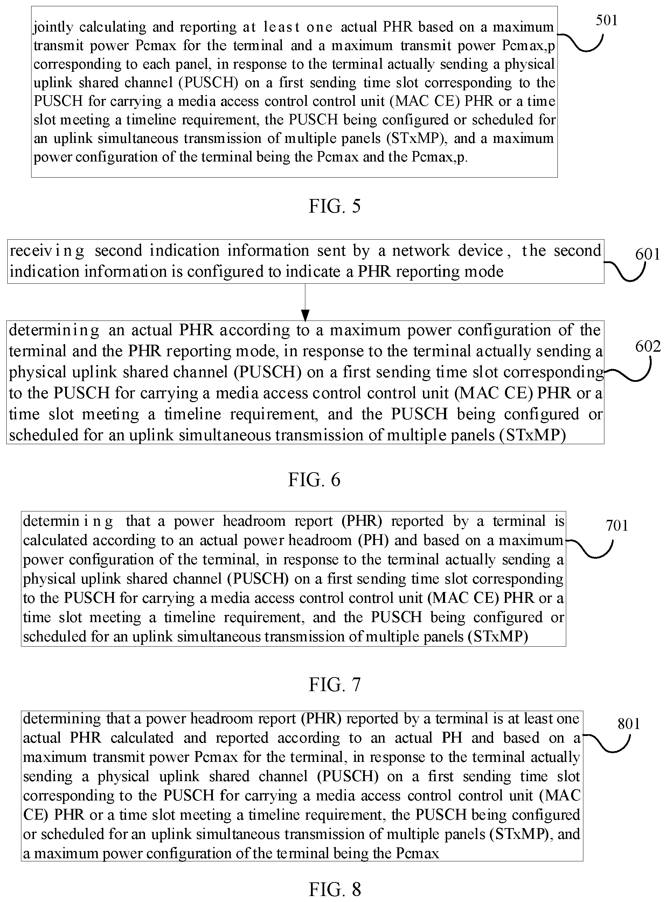

Referring to FIG. 5, FIG. 5 is a flowchart of a power headroom reporting method based on a multi-panel transmission according to an embodiment of the present disclosure. The method is performed by a terminal having multiple panels. As illustrated in FIG. 5, the method may include, but not limited to, the following step.

At step 501, at least one actual PHR is jointly calculated and reported based on a maximum transmit power Pcmax for the terminal and a maximum transmit power Pcmax,p corresponding to each panel, in response to the terminal actually sending a physical uplink shared channel (PUSCH) on a first sending time slot corresponding to the PUSCH for carrying a media access control control unit (MAC CE) PHR or a time slot meeting a timeline requirement, the PUSCH being configured or scheduled for an uplink simultaneous transmission of multiple panels (STxMP), and a maximum power configuration of the terminal being the Pcmax and the Pcmax,p.

Optionally, the terminal may calculate and report an actual PHR corresponding to a specified panel based on the Pcmax, in which the PHR is associated with a transmission occasion corresponding to a PUSCH transmission on the specified panel. Alternatively, the terminal may calculate and report an actual PHR corresponding to a specified panel based on the Pcmax,p corresponding to the specified panel, in which the PHR is associated with a transmission occasion corresponding to a PUSCH transmission on the specified panel. Alternatively, the terminal may calculate and report two actual PHRs corresponding to a specified panel based on the Pcmax and the Pcmax,p corresponding to the specified panel, in which the two actual PHRs each are associated with a transmission occasion corresponding to a PUSCH transmission on the specified panel.

For example, panel1 and panel2 in the terminal are for STxMP, and a transmit power of panel1 is p1 and a transmit power of panel2 is p2. Based on the Pcmax and the Pcmax,p1, the power headroom corresponding to panel1 may be calculated as PH1 and PH1', respectively. Based on the Pcmax and the Pcmax,p1, the power headroom corresponding to panel2 may be calculated as PH2 and PH2', respectively. Then in a case where panel1 is configured as the specified panel, the terminal can report PH1 to the network device, or can report PH1' to the network device, or can also report PH1 together with PH1' to the network device, which are not limited in the present disclosure here.

Optionally, the terminal may determine a panel under a predefined rule as the specified panel. For example, the predefined rule may be: a panel corresponding to a set of sounding reference signal (SRS) resources with a smaller set ID. That is, the terminal can calculate and report the actual PHR corresponding to the panel based on the Pcmax,p corresponding to the panel corresponding to the set of SRS resources with the smaller set ID.

Alternatively, the terminal may determine a panel selected by the terminal as the specified panel. For example, the terminal can determine the actual PH corresponding to each panel based on the maximum transmit power Pcmax,p corresponding to each panel, and select a calculation result corresponding to the panel with a relatively poor PH for reporting.

Alternatively, the terminal may determine the specified panel according to first indication information sent by the network device.

Optionally, the terminal may calculate and report the actual PHRs corresponding respectively to two panels based on the Pcmax, in which Each PHR is associated with a transmission occasion corresponding to a PUSCH transmission on the panel for which the PHR is calculated. Alternatively, the terminal may calculate and report the actual PHRs corresponding respectively to two panels based on the maximum transmit powers Pcmax,p corresponding respectively to the two panels, in which each PHR is associated with a transmission occasion corresponding to a PUSCH transmission on the panel for which the PHR is calculated.

In other words, referring to the above examples, the terminal may report PH1, PH2, PH1' and PH2' to the network device.

Optionally, the terminal may calculate and report an actual PHR corresponding to the terminal based on the Pcmax, and jointly calculate and report two actual PHRs corresponding to each panel of two panels based on the Pcmax in combination with the Pcmax,p corresponding to the two panels, in which each PHR is associated with a transmission occasion corresponding to a PUSCH transmission on the panel for which the PHR is calculated.

For example, panel1 and panel2 in the terminal are for STxMP, and a transmit power of panel1 is p1 and a transmit power of panel2 is p2. Based on the Pcmax and the Pcmax,p1, the power headroom corresponding to panel1 may be calculated as PH1 and PH1', respectively. Based on the Pcmax and the Pcmax,p1, the power headroom corresponding to panel2 may be calculated as PH2 and PH2', respectively. Further, a transmit power of the terminal is p3, and based on the Pcmax, a power headroom of the terminal may be calculated as PH3. Then in a case where panel2 is configured as the specified panel, the terminal can report PH2, PH2' and PH3 to the network device.

Alternatively, the terminal may jointly calculate and report two actual PHRs corresponding to each panel in two panels based on the Pcmax and the Pcmax,p corresponding respectively to the two panels. Each actual PHR is associated with a transmission occasion corresponding to a PUSCH transmission on the panel for which the PHR is calculated.

In other words, referring to the above examples, the terminal may report PH1, PH2, PH1', and PH2' to the network device.

Alternatively, the terminal may calculate and report an actual PHR corresponding to the terminal based on the Pcmax, and jointly calculate and report two actual PHRs corresponding to each panel in two panels based on the Pcmax in combination with the Pcmax,p corresponding respectively to the two panels. Each actual PHR is associated with a transmission occasion corresponding to a PUSCH transmission on the panel for which the PHR is calculated.

In other words, referring to the above examples, the terminal may report PH1, PH2, PH1', PH2' and PH3 to the network device.

In the above examples, regarding a method of determining the specified panel, reference may be made to detailed descriptions of any embodiment of the disclosure, which will not be described again here.

In the present disclosure, for the specific explanation of the PHR, reference can be made to detailed descriptions of any embodiment of the disclosure, which will not be described again here.

In the present disclosure, when the terminal actually sends the PUSCH on the first sending time slot corresponding to the PUSCH for carrying the MAC CE PHR, or actually sends the PUSCH on the time slot meeting the timeline requirement, the PUSCH is configured or scheduled for the STxMP, and the maximum power configuration of the terminal includes the Pcmax and the Pcmax,p corresponding to each panel, the terminal can jointly calculate and report at least one actual PHR based on the Pcmax and the Pcmax,p. As a result, the network device can determine the PH of each panel based on the PHR reported by the terminal having the multiple panels, thereby accurately scheduling resources for each panel and ensuring the reliability of uplink transmission.

Referring to FIG. 6, FIG. 6 is a flowchart of a power headroom reporting method based on a multi-panel transmission according to an embodiment of the present disclosure. The method is performed by a terminal having multiple panels. As illustrated in FIG. 6, the method may include, but not limited to, the following steps.

At step 601, second indication information sent by a network device is received. The second indication information is configured to indicate a PHR reporting mode.

The PHR reporting mode may include at least one of reporting one PHR, reporting two PHRs, reporting three PHRs, reporting four PHRs, or reporting five PHRs.

In the present disclosure, the network device can indicate to the terminal the PHR reporting mode according to the terminal's capability to report the PHR. For example, if the terminal has a capability to report 4 PHRs, the network device can instruct the terminal to report 1 PHR, or to report 2 PHRs, or to report 3 PHRs, or to report 4 PHRs.

At step 602, an actual PHR is determined according to a maximum power configuration of the terminal and the PHR reporting mode, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

In the present disclosure, when the network device instructs the terminal to report one PHR, the terminal can calculate and report an actual PHR corresponding to one panel. For example, the terminal can report the PH of a panel selected by itself, or can also report the actual PHR corresponding to a panel indicated by the network device, etc., which is not limited in the present disclosure.

Alternatively, when the network device instructs the terminal to report two PHRs, the terminal can calculate and report actual PHRs corresponding to two panels. For example, the terminal can calculate and report the actual PHRs corresponding respectively to two panels according to the Pcmax,p corresponding to each panel, or can also calculate and report the actual PHRs corresponding respectively to two panels according to the Pcmax and a power allocation rule, etc., which is not limited in the present disclosure.

Alternatively, when the network device instructs the terminal to report three PHRs, the terminal can calculate and report three actual PHRs corresponding to two panels based on the Pcmax of the terminal and the Pcmax,p corresponding to each panel. When the network device instructs the terminal to report four PHRs, the terminal can calculate and report two actual PHRs corresponding to each of two panels based on the Pcmax of the terminal and the Pcmax,p corresponding to each panel.

In the present disclosure, regarding the specific explanation of the maximum power configuration of the terminal and the method of calculating and reporting the actual PHR, reference can be made to detailed descriptions of any embodiment of the disclosure, which will not be described again here.

In the present disclosure, after the terminal receives the second indication information for indicating the PHR reporting mode sent by the network device, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the STxMP, the terminal determines the actual PHR according to the maximum power configuration of the terminal and the PHR reporting mode. As a result, the network device can determine the PH of each panel based on the PHR reported by the terminal having the multiple panels, thereby accurately scheduling resources for each panel and ensuring the reliability of uplink transmission.

Referring to FIG. 7, FIG. 7 is a flowchart of a power headroom reporting method based on a multi-panel transmission according to an embodiment of the present disclosure. The method is performed by a network device. As illustrated in FIG. 7, the method may include, but not limited to, the following step.

At step 701, it is determined that a power headroom report (PHR) reported by a terminal is calculated according to an actual power headroom (PH) and based on a maximum power configuration of the terminal, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

The first sending time slot corresponding to the PUSCH for carrying the MAC CE PHR may be a sending time slot having the smallest time domain position in various sending time slots corresponding to the PUSCH for carrying the MAC CE PHR that are indicated in downlink control information (DCI). The time slot meeting the timeline requirement may be a time slot meeting the timeline requirement for PHR reporting determined by the terminal according to a protocol agreement or an indication of a network device.

**In** the present disclosure, when the terminal performs uplink transmission, in order to ensure the reliability of the uplink transmission, the terminal may report a PHR to the network device. When the terminal actually sends the PUSCH on the first sending time slot corresponding to the PUSCH for carrying the MAC CE PHR or actually sends the PUSCH on the time slot meeting the timeline requirement, it may be considered that the terminal has an actual PUSCH transmission, so that the PHR can be calculated and reported according to an actual PH.

Optionally, the terminal can calculate and report the PHR according to the actual PH and based on its maximum power configuration. Therefore, the network device can determine the power headroom of the terminal based on the PHR, and accurately determine a bandwidth that the panel of the terminal can send and a transmission mode in combination with the coding and modulation scheme of the terminal, thereby ensuring the reliability of the uplink transmission.

Optionally, the maximum power configuration of the terminal may include the maximum transmit power Pcmax for the terminal, or may be the maximum transmit power Pcmax,p for each of different panels, or may include both the Pcmax and the Pcmax,p, which is not limited in the present disclosure.

The PHR may include an actual PH value calculated based on the maximum transmit power and a power of the actually transmitted PUSCH.

Optionally, the PHR reported by the terminal may be at least one PHR calculated and reported by the terminal based on the maximum transmit power Pcmax for the terminal and according to the actual PH; or may be at least one PHR calculated and reported by the terminal based on the maximum transmit power Pcmax,p for at least one panel and according to the actual PH; or may be at least one PHR jointly calculated and reported by the terminal based on the Pcmax and the Pcmax,p and according to the actual PH, etc., which is not limited in the present disclosure.

In the present disclosure, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the uplink simultaneous transmission of multiple panels, the network device can determine that the PHR reported by the terminal is the PHR calculated according to the actual PH and based on the maximum power configuration of the terminal and reported when a PHR reporting condition is met.

In present disclosure, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the STxMP, the network device can determine that the PHR reported by the terminal is calculated and reported according to the actual PH and based on the maximum power configuration of the terminal. Therefore, the network device can determine the PH of each panel based on the PHR reported by the terminal having the multiple panels, thereby accurately scheduling resources for each panel and ensuring the reliability of uplink transmission.

Referring to FIG. 8, FIG. 8 is a flowchart of a power headroom reporting method based on a multi-panel transmission according to an embodiment of the present disclosure. The method is performed by a network device. As illustrated in FIG. 8, the method may include, but not limited to, the following step.

At step 801, it is determined that a power headroom report (PHR) reported by a terminal is at least one actual PHR calculated according to an actual PH and based on a maximum transmit power Pcmax for the terminal, in response to the terminal actually sending a physical uplink shared channel (PUSCH) on a first sending time slot corresponding to the PUSCH for carrying a media access control control unit (MAC CE) PHR or a time slot meeting a timeline requirement, the PUSCH being configured or scheduled for an uplink simultaneous transmission of multiple panels (STxMP), and a maximum power configuration of the terminal being the Pcmax.

In the present disclosure, when the maximum power configuration of the terminal is the Pcmax for the terminal, and the PUSCH is configured or scheduled for the STxMP, the terminal can perform power allocation of the Pcmax according to a preset power allocation rule, to determine a maximum transmit power corresponding to each panel.

Optionally, the terminal can perform power allocation of the Pcmax according to an average allocation rule to determine the maximum transmit power corresponding to each panel.

Alternatively, the terminal can also perform power allocation of the Pcmax according to a dynamic allocation rule to determine the maximum transmit power corresponding to each panel. The dynamic allocation rule can be indicated by the network device or determined according to a protocol agreement, which is not limited here.

Optionally, the terminal can calculate and report the actual PHR of a specified panel according to the Pcmax and the power allocation rule, in which the PHR is associated with a transmission occasion corresponding to a PUSCH transmission on the panel for which the PHR is calculated.

Optionally, the specified panel can be a panel under a predefined rule. For example, the predefined rule may be: a panel corresponding to a set of sounding reference signal (SRS) resources with a smaller set ID. That is, the terminal can calculate and report the actual PHR corresponding to the panel corresponding to the set of SRS resources with the smaller set ID according to the power allocation rule.

Alternatively, the specified panel can be a panel selected by the terminal. For example, the terminal can determine the maximum transmit power corresponding to each panel based on the Pcmax and the power allocation rule, calculate the actual PH corresponding to each panel, and select a calculation result corresponding to the panel with a relatively poor PH for reporting.

Optionally, the network device may send first indication information to the terminal, to instruct the terminal to report an actual PHR of a specified panel.

Alternatively, the network device may determine that the PHR reported by the terminal can be actual PHRs of two panels calculated and reported according to the Pcmax and the power allocation rule, in which each PHR is associated with a transmission occasion corresponding to a PUSCH transmission on the panel for which the PHR is calculated.

For example, the terminal can determine the maximum transmit power corresponding to each panel based on the Pcmax and the power allocation rule, calculate the actual PH corresponding to each panel, and report the PHRs corresponding respectively to the two panels.

In the present disclosure, for the specific explanation of the PHR, reference can be made to detailed descriptions of any embodiment of the disclosure, which will not be described again here.

In the present disclosure, when the terminal actually sends the PUSCH on the first sending time slot corresponding to the PUSCH for carrying the MAC CE PHR, or actually sends the PUSCH on the time slot meeting the timeline requirement, the PUSCH is configured or scheduled for the STxMP, and the terminal has the maximum transmit power Pcmax, the network device may determine that the PHR reported by the terminal is the at least one actual PHR calculated based on the actual PH and the maximum transmit power Pcmax for the terminal. As a result, the network device can determine the PH of each panel based on the PHR reported by the terminal having the multiple panels, thereby accurately scheduling resources for each panel and ensuring the reliability of uplink transmission.

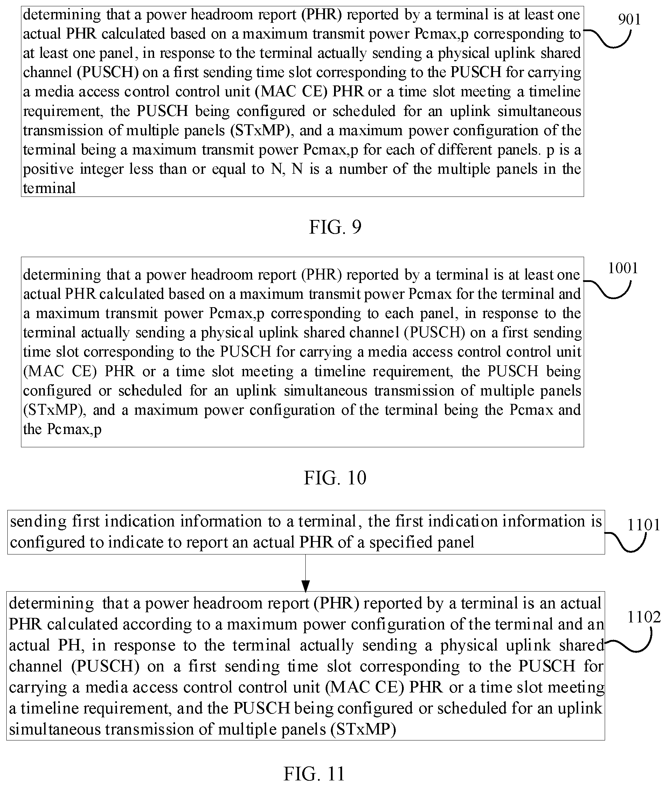

Referring to FIG. 9, FIG. 9 is a flowchart of a power headroom reporting method based on a multi-panel transmission according to an embodiment of the present disclosure. The method is performed by a network device. As illustrated in FIG. 9, the method may include, but not limited to, the following step.

At step 901, it is determined that a power headroom report (PHR) reported by a terminal is at least one actual PHR calculated based on a maximum transmit power Pcmax,p corresponding to at least one panel, in response to the terminal actually sending a physical uplink shared channel (PUSCH) on a first sending time slot corresponding to the PUSCH for carrying a media access control control unit (MAC CE) PHR or a time slot meeting a timeline requirement, the PUSCH being configured or scheduled for an uplink simultaneous transmission of multiple panels (STxMP), and a maximum power configuration of the terminal being a maximum transmit power Pcmax,p for each of different panels. p is a positive integer less than or equal to N, N is a number of the multiple panels in the terminal.

In the present disclosure, when the maximum power configuration of the terminal includes the maximum transmit powers Pcmax,p for different panels, the PUSCH is configured or scheduled for the STxMP, and the terminal actually sends the PUSCH on the first sending time slot corresponding to the PUSCH for carrying the MAC CE PHR or the time slot meeting the timeline requirement, the network device may determine an actual PHR corresponding to at least one panel calculated and reported by the terminal according to the Pcmax,p corresponding to the at least one panel.

Optionally, if the maximum power configuration of the terminal includes the maximum transmit powers Pcmax,p corresponding to different panels, the terminal may calculate and report an actual PHR corresponding to a specified panel according to a Pcmax,p corresponding to the specified panel. The PHR is associated with a transmission occasion corresponding to a PUSCH transmission on the panel for which the PHR is calculated.

Optionally, the network device may determine a panel under a predefined rule as the specified panel. For example, the predefined rule may be: a panel corresponding to a set of sounding reference signal (SRS) resources with a smaller set ID. That is, the terminal can calculate and report the actual PHR corresponding to the panel based on the Pcmax,p corresponding to the panel corresponding to the set of SRS resources with the smaller set ID.

Optionally, the network device may determine a panel selected by the terminal as the specified panel. For example, the terminal can determine the actual PH corresponding to each panel based on the maximum transmit power Pcmax,p corresponding to each panel, and select a calculation result corresponding to the panel with a relatively poor PH for reporting.

Alternatively, the network device may send first indication information to the terminal, to instruct the terminal to report an actual PHR of a specified panel.

Optionally, the network device may determine that the PHR reported by the terminal includes actual PHRs of two panels calculated respectively by the terminal according to the maximum transmit powers Pcmax,p corresponding respectively to the two panels. Each PHR is associated with a transmission occasion corresponding to a PUSCH transmission on the panel for which the PHR is calculated.

For example, the terminal calculates PHR#1 based on Pcmax,p#1 corresponding to panel#1, and calculates PHR#2 based on Pcmax,p#2 corresponding to panel#2. PHR#1 is associated with the transmission occasion corresponding to the PUSCH transmission on panel#1, PHR#2 is associated with the transmission occasion corresponding to the PUSCH transmission on panel#2, and PHR#1 and PHR#2 are reported to the network device.

In the present disclosure, for the specific explanation of the PHR, reference can be made to detailed descriptions of any embodiment of the disclosure, which will not be described again here.

**In** the present disclosure, when the terminal actually sends the PUSCH on the first sending time slot corresponding to the PUSCH for carrying the MAC CE PHR, or actually sends the PUSCH on the time slot meeting the timeline requirement, the PUSCH is configured or scheduled for the STxMP, and the maximum power configuration of the terminal is for each panel, the network device can determine that the PHR reported by the terminal is at least one actual PHR calculated and reported by the terminal based on the maximum transmit power Pcmax,p corresponding to the at least one panel. As a result, the network device can determine the PH of each panel based on the PHR reported by the terminal having the multiple panels, thereby accurately scheduling resources for each panel and ensuring the reliability of uplink transmission.

Referring to FIG. 10, FIG. 10 is a flowchart of a power headroom reporting method based on a multi-panel transmission according to an embodiment of the present disclosure. The method is performed by a network device. As illustrated in FIG. 10, the method may include, but not limited to, the following step.

At step 1001, it is determined that a power headroom report (PHR) reported by a terminal is at least one actual PHR calculated based on a maximum transmit power Pcmax for the terminal and a maximum transmit power Pcmax,p corresponding to each panel, in response to the terminal actually sending a physical uplink shared channel (PUSCH) on a first sending time slot corresponding to the PUSCH for carrying a media access control control unit (MAC CE) PHR or a time slot meeting a timeline requirement, the PUSCH being configured or scheduled for an uplink simultaneous transmission of multiple panels (STxMP), and a maximum power configuration of the terminal being the Pcmax and the Pcmax,p.

In the present disclosure, for the specific explanation of the PHR, reference can be made to detailed descriptions of any embodiment of the disclosure, which will not be described again here.

In the present disclosure, when the terminal actually sends the PUSCH on the first sending time slot corresponding to the PUSCH for carrying the MAC CE PHR, or actually sends the PUSCH on the time slot meeting the timeline requirement, the PUSCH is configured or scheduled for the STxMP, and the maximum power configuration of the terminal includes the Pcmax and the Pcmax,p corresponding to each panel, the network device determines that the PHR reported by the terminal is at least one actual PHR jointly calculated and reported based on the Pcmax and the Pcmax,p. As a result, the network device can determine the PH of each panel based on the PHR reported by the terminal having the multiple panels, thereby accurately scheduling resources for each panel and ensuring the reliability of uplink transmission.

Referring to FIG. 11, FIG. 11 is a flowchart of a power headroom reporting method based on a multi-panel transmission according to an embodiment of the present disclosure. The method is performed by a network device. As illustrated in FIG. 11, the method may include, but not limited to, the following steps.

At step 1101, first indication information is sent to a terminal. The first indication information is configured to indicate to report an actual PHR of a specified panel.

The first indication information may include an identifier of the specified panel, such as a panel number, etc., which is not limited in the present disclosure.

At step 1102, it is determined that a power headroom report (PHR) reported by a terminal is an actual PHR of the specified panel calculated according to a maximum power configuration of the terminal and an actual PH, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

In the present disclosure, after the network device sends the first indication information to the terminal, when the terminal actually sends the PUSCH on the first sending time slot corresponding to the PUSCH for carrying the MAC CE PHR, or actually sends the PUSCH on the time slot meeting the timeline requirement, and the PUSCH is configured or scheduled for the STxMP, the network device may determine that the PHR reported by the terminal is the actual PHR of the specified panel calculated based on the maximum power configuration and the actual PH.

Optionally, if the network device receives an actual PHR reported by the terminal, the network device may determine that the actual PHR is the actual PHR corresponding to the specified panel calculated by the terminal based on the Pcmax, in which the PHR is associated with the transmission occasion corresponding to the PUSCH transmission on the specified panel; or, if the network device receives an actual PHR reported by the terminal, the network device may determine that the actual PHR is the actual PHR corresponding to the specified panel calculated by the terminal based on the Pcmax,p corresponding to the specified panel, in which the PHR is associated with the transmission occasion corresponding to the PUSCH transmission on the specified panel.

Optionally, the network device may determine a panel under a predefined rule as the specified panel. For example, the predefined rule may be: a panel corresponding to a set of sounding reference signal (SRS) resources with a smaller set ID. That is, the terminal can calculate and report the actual PHR corresponding to the panel based on the Pcmax,p corresponding to the panel corresponding to the set of SRS resources with the smaller set ID.

Alternatively, the network device may determine a panel selected by the terminal as the specified panel. For example, the terminal can determine the actual PH corresponding to each panel based on the maximum transmit power Pcmax,p corresponding to each panel, and select a calculation result corresponding to the panel with a relatively poor PH for reporting.

Alternatively, the network device may send first indication information to the terminal, to instruct the terminal to report an actual PHR of the specified panel.

For example, the terminal includes panel1 and panel2, in which panel1 is the specified panel. When the terminal has an actual PUSCH configured or scheduled for the STxMP to be sent, if the network device receives an actual PHR, the network device can determine that the actual PHR is calculated based on the Pcmax and the transmit power of panel1, or calculated based on the Pcmax,p1.

Optionally, if the network device receives two actual PHRs reported by the terminal, the network device determines that the two actual PHRs are two actual PHRs corresponding to the specified panel calculated respectively by the terminal based on the Pcmax and the Pcmax,p corresponding to the specified panel. The two actual PHRs each are associated with the transmission occasion corresponding to the PUSCH transmission on the specified panel.

That is, referring to the above examples, if the network device receives two PHRs, the network device may determine that the two PHRs are calculated based on the Pcmax,p 1 and the Pcmax respectively.

Alternatively, if the network device receives two actual PHRs reported by the terminal, the network device determines that the two actual PHRs are actual PHRs corresponding respectively to the two panels calculated respectively by the terminal based on the Pcmax. Each PHR is associated with the transmission occasion corresponding to the PUSCH transmission on the panel for which the PHR is calculated.

For example, the terminal includes panel1 and panel2, in which panel1 is the specified panel. When the terminal has an actual PUSCH configured or scheduled for the STxMP to be sent, if the network device receives two actual PHRs, the network device can determine that the two actual PHRs are PHRs corresponding respectively to panel1 and panel2 calculated by the terminal based on the Pcmax.

Optionally, if the network device receives two actual PHRs reported by the terminal, the network device determines that the two actual PHRs are actual PHRs corresponding respectively to two panels calculated respectively and reported by the terminal based on the maximum transmit powers Pcmax,p corresponding respectively to the two panels. Each PHR is associated with the transmission occasion corresponding to the PUSCH transmission on the panel for which the PHR is calculated.

For example, the terminal includes panel1 and panel2, in which panel1 is the specified panel. When the terminal has an actual PUSCH configured or scheduled for the STxMP to be sent, if the network device receives two actual PHRs, the network device can determine that the two actual PHRs are PHRs corresponding respectively to panel1 and panel2 calculated by the terminal based on the Pcmax,p1 and Pcmax,p2.

Optionally, if the network device receives three actual PHRs reported by the terminal, the network device determines that the three actual PHRs include an actual PHR corresponding to the terminal calculated and reported by the terminal based on the Pcmax and two actual PHRs corresponding to the specified panel jointly calculated and reported by the terminal based on the Pcmax in combination with the Pcmax,p corresponding to the specified panel in the two panels. The two actual PHRs each are associated with the transmission occasion corresponding to the PUSCH transmission on the specified panel.

For example, the terminal includes panel1 and panel2, in which panel1 is the specified panel. When the terminal has an actual PUSCH configured or scheduled for the STxMP to be sent, if the network device receives three actual PHRs, the network device can determine that the three actual PHRs include the actual PHR of the terminal calculated by the terminal based on the Pcmax and the total transmit power of the terminal and two actual PHRs of panel1 calculated respectively by the terminal based on the the Pcmax, the Pcmax,p1 and the actual transmit power of panel1.

Optionally, if the network device receives four actual PHRs reported by the terminal, the network device determines that the four actual PHRs include two actual PHRs corresponding to each of two panels jointly calculated and reported by the terminal based on the Pcmax and the Pcmax,p corresponding to the two panels. Each actual PHR is associated with the transmission occasion corresponding to the PUSCH transmission on the panel for which the PHR is calculated.

That is, referring to the above examples, if the network device receives four PHRs, the four PHRs may include: the actual PHRs of panel1 and panel2 calculated respectively by the terminal based on the Pcmax, and the PHRs corresponding to panel1 and panel2 calculated respectively by the terminal based on the Pcmax,p1 and the Pcmax,p2.

Optionally, if the network device receives five actual PHRs reported by the terminal, the network device determines that the five actual PHRs include an actual PHR corresponding to the terminal calculated and reported by the terminal based on the Pcmax, and two actual PHRs corresponding to each of two panels jointly calculated and reported by the terminal based on the Pcmax in combination with the Pcmax,p corresponding to the two panels. Each actual PHR is associated with the transmission occasion corresponding to the PUSCH transmission on the panel for which the PHR is calculated.

That is, referring to the above examples, if the network device receives five PHRs, the five PHRs may include: the actual PHR of the terminal calculated by the terminal based on the Pcmax and the total transmit power of the terminal, the two actual PHRs of panel1 calculated respectively by the terminal based on the Pcmax, the Pcmax,p1 and the actual transmit power of panel1, and the two actual PHRs of panel2 calculated respectively by the terminal based on the Pcmax, the Pcmax,p2 and the actual transmit power of panel2.

In the present disclosure, for the specific explanation of the PHR, reference can be made to detailed descriptions of any embodiment of the disclosure, which will not be described again here.

In the present disclosure, after the network device sends the indication for instructing the terminal to report an actual PHR of a specified panel to the terminal, when the terminal actually sends the PUSCH on the first sending time slot corresponding to the PUSCH for carrying the MAC CE PHR, or actually sends the PUSCH on the time slot meeting the timeline requirement, the PUSCH is configured or scheduled for the STxMP, the network device determines that the PHR reported by the terminal is the actual PHR of the specified panel calculated based on the maximum power configuration of the terminal and the actual PH. As a result, the network device can determine the PH of each panel based on the PHR reported by the terminal having the multiple panels, thereby accurately scheduling resources for each panel and ensuring the reliability of uplink transmission.

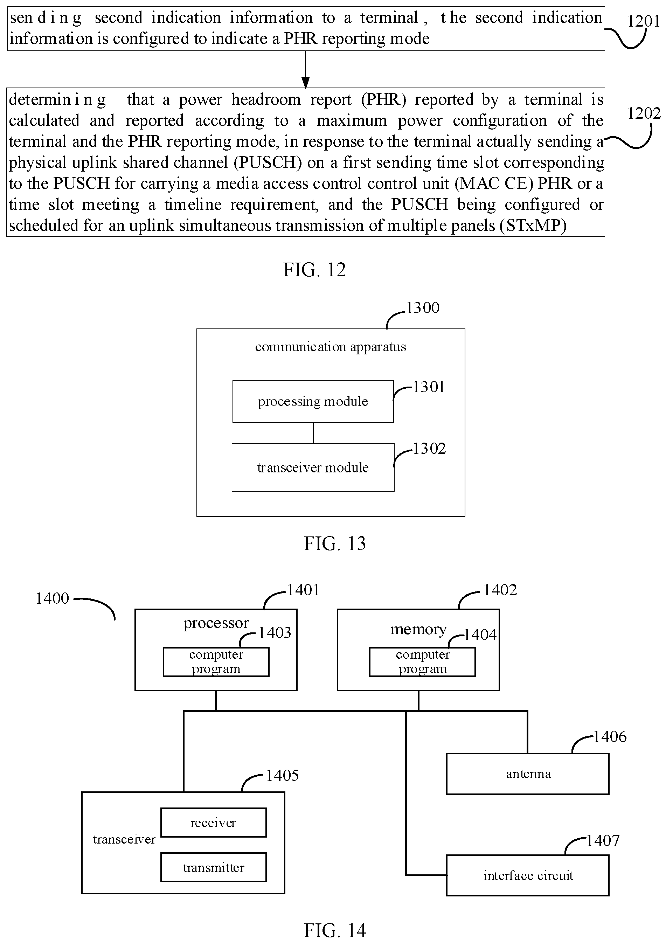

Referring to FIG. 12, FIG. 12 is a flowchart of a power headroom reporting method based on a multi-panel transmission according to an embodiment of the present disclosure. The method is performed by a network device. As illustrated in FIG. 12, the method may include, but not limited to, the following steps.

At step 1201, second indication information is sent to a terminal. The second indication information is configured to indicate a PHR reporting mode.

The PHR reporting mode may include at least one of reporting one PHR, reporting two PHRs, reporting three PHRs, reporting four PHRs, or reporting five PHRs.

In the present disclosure, the network device can indicate to the terminal the PHR reporting mode according to the terminal's capability to report the PHR. For example, if the terminal has a capability to report 4 PHRs, the network device can instruct the terminal to report 1 PHR, or to report 2 PHRs, or to report 3 PHRs, or to report 4 PHRs. In the present disclosure, for the specific explanation of the PHR, reference can be made to detailed descriptions of any embodiment of the disclosure, which will not be described again here.

At step 1202, it is determined that a power headroom report (PHR) reported by a terminal is calculated and reported according to a maximum power configuration of the terminal and the PHR reporting mode, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

Regarding a specific process that the terminal calculates and selects the reported PHR, reference can be made to detailed descriptions of any embodiment of the disclosure, which will not be described again here.

Regarding a specific process of the step 1202, reference can be made to detailed descriptions of any embodiment of the disclosure, which will not be described again here.

In the present disclosure, after the network device sends the second indication information for instructing the PHR reporting mode to the terminal, when the terminal actually sends the PUSCH on the first sending time slot corresponding to the PUSCH for carrying the MAC CE PHR, or actually sends the PUSCH on the time slot meeting the timeline requirement, the PUSCH is configured or scheduled for the STxMP, the network device determines that the PHR reported by the terminal is the actual PHR of the specified panel calculated based on the maximum power configuration of the terminal and the actual PH. As a result, the network device can determine the PH of each panel based on the PHR reported by the terminal having the multiple panels, thereby accurately scheduling resources for each panel and ensuring the reliability of uplink transmission.

FIG. 13 is a block diagram of a communication apparatus according to an embodiment of the present disclosure. The communication apparatus 1300 shown in FIG. 13 may include a processing module 1301 and a transceiver module 1302.

It can be understood that the communication apparatus 1300 may be a terminal having multiple panels, or an apparatus in the terminal having multiple panels, or an apparatus that can be used in conjunction with the terminal having multiple panels. Alternatively, the communication apparatus 1300 may be a network device, an apparatus in the network device, or an apparatus that can be used in conjunction with the network device.

Optionally, the communication apparatus 1300, on the side of the terminal having multiple panels, includes: the processing module 1301, configured to calculate and report a power headroom report (PHR) according to an actual power headroom (PH) and based on a maximum power configuration of the terminal, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

Optionally, the processing module 1301 is configured to:
calculate and report at least one actual PHR based on a maximum transmit power Pcmax for the terminal, in response to the maximum power configuration of the terminal including the Pcmax; or
calculate and report at least one actual PHR based on a maximum transmit power Pcmax,p corresponding to at least one panel, in response to the maximum power configuration of the terminal including a maximum transmit power Pcmax,p for each of different panels, where p is a positive integer less than or equal to N, N is a number of the multiple panels in the terminal; or
jointly calculate and report at least one actual PHR based on a maximum transmit power Pcmax for the terminal and a maximum transmit power Pcmax,p corresponding to each panel, in response to the maximum power configuration of the terminal including the Pcmax and the Pcmax,p corresponding to each panel.

Optionally, the processing module 1301 is configured to:
calculate and report an actual PHR of a specified panel according to a power allocation rule and based on the Pcmax, in which the actual PHR is associated with a transmission occasion corresponding to a PUSCH transmission on the specified panel for which the actual PHR is calculated; or
calculate and report actual PHRs of two panels according to a power allocation rule and based on the Pcmax, in which each of the actual PHRs is associated with a transmission occasion corresponding to a PUSCH transmission on a panel for which the actual PHR is calculated.

Optionally, the processing module 1301 is configured to:
calculate and report an actual PHR corresponding to a specified panel according to a Pcmax,p corresponding to the specified panel, in which the actual PHR is associated with a transmission occasion corresponding to a PUSCH transmission on the specified panel for which the actual PHR is calculated; or
calculate and report actual PHRs corresponding respectively to two panels according to a Pcmax,p corresponding to each of the two panels, in which each of the actual PHRs is associated with a transmission occasion corresponding to a PUSCH transmission on a panel for which the actual PHR is calculated.

Optionally, the processing module 1301 is configured to:
calculate and report an actual PHR corresponding to a specified panel based on the Pcmax, in which the actual PHR is associated with a transmission occasion corresponding to a PUSCH transmission on the specified panel for which the actual PHR is calculated; or
calculate and report an actual PHR corresponding to a specified panel based on a Pcmax,p corresponding to the specified panel, in which the actual PHR is associated with a transmission occasion corresponding to a PUSCH transmission on the specified panel for which the actual PHR is calculated; or
respectively calculate and report two actual PHRs corresponding to a specified panel based on the Pcmax and a Pcmax,p corresponding to the specified panel, in which the two actual PHRs each are associated with a transmission occasion corresponding to a PUSCH transmission on the specified panel for which the two actual PHRs are calculated; or
calculate and report actual PHRs corresponding respectively to two panels based on the Pcmax, in which each of the actual PHRs is associated with a transmission occasion corresponding to a PUSCH transmission on a panel for which the actual PHR is calculated; or
calculate and report actual PHRs corresponding respectively to two panels according to a Pcmax,p corresponding to each of the two panels, in which each of the actual PHRs is associated with a transmission occasion corresponding to a PUSCH transmission on a panel for which the actual PHR is calculated; or
calculate and report an actual PHR corresponding to the terminal based on the Pcmax, and jointly calculate and report two actual PHRs corresponding to a specified panel based on the Pcmax in combination with a Pcmax,p corresponding to the specified panel of the two panels, in which the two actual PHRs each are associated with a transmission occasion corresponding to a PUSCH transmission on the specified panel; or
jointly calculate and report two actual PHRs corresponding to each of two panels according to the Pcmax and a Pcmax,p corresponding to each of the two panels, in which each of the two actual PHRs is associated with a transmission occasion corresponding to a PUSCH transmission on a panel for which the actual PHR is calculated; or
calculate and report an actual PHR corresponding to the terminal based on the Pcmax, and jointly calculate and report two actual PHRs corresponding to each of two panels based on the Pcmax in combination with a Pcmax,p corresponding to each panel of the two panels, in which each actual PHR is associated with a transmission occasion corresponding to a PUSCH transmission on a panel for which the actual PHR is calculated.

Optionally, the processing module 1301 is configured to:
determine a panel under a predefined rule as the specified panel; or
determine a panel selected by the terminal as the specified panel; or
determine the specified panel according to first indication information sent by a network device.

Optionally, the communication apparatus further includes the transceiver module 1302, configured to receive second indication information sent by a network device, in which the second indication information is configured to indicate a PHR reporting mode.

The processing module 1301 is configured to determine the actual PHR according to the maximum power configuration of the terminal and the PHR reporting mode.

Optionally, the PHR reporting mode includes at least one of: reporting one PHR, reporting two PHRs, reporting three PHRs, reporting four PHRs, or reporting five PHRs.

In the present disclosure, in a case where the terminal actually sends the PUSCH on the first transmission time slot corresponding to the PUSCH for carrying the MACCE PHR, or on the time slot that meets the timeline requirement, and the PUSCH is configured or scheduled for the STxMP, the terminal can calculate and report the PHR according to the actual PH and based on the maximum power configuration of the terminal. Therefore, the network device can determine the PH of each panel based on the PHR reported by the terminal having the multiple panels, thereby accurately scheduling resources for each panel and ensuring the reliability of uplink transmission.

Optionally, the communication apparatus 1300, on the side of the network device, includes: the processing module 1301, configured to determine that a power headroom report (PHR) reported by a terminal is calculated according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

Optionally, the processing module 1301 is configured to:
determine that the PHR reported by the terminal is at least one actual PHR calculated based on a maximum transmit power Pcmax for the terminal, in response to the maximum power configuration of the terminal including the Pcmax; or
determine that the PHR reported by the terminal is at least one actual PHR calculated based on a maximum transmit power Pcmax,p corresponding to at least one panel, in response to the maximum power configuration of the terminal including a maximum transmit power Pcmax,p for each of different panels, where p is a positive integer less than or equal to N, N is a number of the multiple panels in the terminal; or
determine that the PHR reported by the terminal is at least one actual PHR jointly calculated based on a maximum transmit power Pcmax for the terminal and a maximum transmit power Pcmax,p corresponding to each panel, in response to the maximum power configuration of the terminal including the Pcmax and the Pcmax,p corresponding to each panel.

Optionally, the processing module 1301 is configured to:
determine that the PHR reported by the terminal is an actual PHR of a specified panel calculated according to a power allocation rule and based on the Pcmax, in which the actual PHR is associated with a transmission occasion corresponding to a PUSCH transmission on the specified panel for which the actual PHR is calculated; or
determine that the PHR reported by the terminal includes actual PHRs of two panels calculated according to a power allocation rule and based on the Pcmax, in which each of the actual PHRs is associated with a transmission occasion corresponding to a PUSCH transmission on a panel for which the actual PHR is calculated.

Optionally, the processing module 1301 is configured to:
determine that the PHR reported by the terminal is an actual PHR corresponding to a specified panel calculated based on a Pcmax,p corresponding to the specified panel, in which the actual PHR is associated with a transmission occasion corresponding to a PUSCH transmission on the specified panel for which the actual PHR is calculated; or
determine that the PHR reported by the terminal includes actual PHRs corresponding respectively to two panels calculated based on a Pcmax,p corresponding to each of the two panels, in which each of the actual PHRs is associated with a transmission occasion corresponding to a PUSCH transmission on a panel for which the actual PHR is calculated.

Optionally, the processing module 1301 is configured to:
in response to receiving an actual PHR reported by the terminal, determine that the actual PHR is an actual PHR corresponding to a specified panel calculated by the terminal based on the Pcmax, in which the actual PHR is associated with a transmission occasion corresponding to a PUSCH transmission on the specified panel for which the actual PHR is calculated; or
in response to receiving an actual PHR reported by the terminal, determine that the actual PHR is an actual PHR corresponding to a specified panel calculated by the terminal based on a Pcmax,p corresponding to the specified panel, in which the actual PHR is associated with a transmission occasion corresponding to a PUSCH transmission on the specified panel for which the actual PHR is calculated; or
in response to receiving two actual PHRs reported by the terminal, determine that the two actual PHRs are two actual PHRs corresponding to a specified panel calculated respectively by the terminal based on the Pcmax and a Pcmax,p corresponding to the specified panel, in which the two actual PHRs each are associated with a transmission occasion corresponding to a PUSCH transmission on the specified panel for which the two actual PHRs are calculated; or
in response to receiving two actual PHRs reported by the terminal, determine that the two actual PHRs are actual PHRs corresponding respectively to two panels calculated respectively by the terminal based on the Pcmax, in which each of the actual PHRs is associated with a transmission occasion corresponding to a PUSCH transmission on a panel for which the actual PHR is calculated; or
in response to receiving two actual PHRs reported by the terminal, determine that the two actual PHRs are actual PHRs corresponding respectively to two panels calculated respectively and reported by the terminal according to a Pcmax,p corresponding to each of the two panels, in which each of the actual PHRs is associated with a transmission occasion corresponding to a PUSCH transmission on a panel for which the actual PHR is calculated; or
in response to receiving three actual PHRs reported by the terminal, determine that the three actual PHRs include an actual PHR corresponding to the terminal calculated and reported by the terminal based on the Pcmax and two actual PHRs corresponding to a specified panel jointly calculated and reported by the terminal based on the Pcmax in combination with a Pcmax,p corresponding to the specified panel of the two panels, in which the two actual PHRs each are associated with a transmission occasion corresponding to a PUSCH transmission on the specified panel; or
in response to receiving four actual PHRs reported by the terminal, determine that the four actual PHRs include two actual PHRs corresponding to each of two panels jointly calculated and reported by the terminal according to the Pcmax and a Pcmax,p corresponding to each of the two panels, in which each of the two actual PHRs is associated with a transmission occasion corresponding to a PUSCH transmission on a panel for which the actual PHR is calculated; or
in response to receiving five actual PHRs reported by the terminal, determine that the five actual PHRs include an actual PHR corresponding to the terminal calculated and reported by the terminal based on the Pcmax and two actual PHRs corresponding to each of two panels jointly calculated and reported by the terminal based on the Pcmax in combination with a Pcmax,p corresponding to each panel of the two panels, in which each actual PHR is associated with a transmission occasion corresponding to a PUSCH transmission on a panel for which the actual PHR is calculated.

Optionally, the processing module 1301 is configured to:
determine a panel under a predefined rule as the specified panel; or
determine a panel selected by the terminal as the specified panel; or
the transceiver module 1301 is configured to send first indication information to the terminal, in which the first indication information is configured to indicate the terminal to report the actual PHR of the specified panel.

Optionally, the transceiver module 1301 is configured to:
send second indication information to the terminal, in which the second indication information is configured to indicate a PHR reporting mode.
Optionally, the PHR reporting mode includes at least one of: reporting one PHR, reporting two PHRs, reporting three PHRs, reporting four PHRs, or reporting five PHRs.

In the present disclosure, in a case where the terminal actually sends the PUSCH on the first transmission time slot corresponding to the PUSCH for carrying the MACCE PHR, or on the time slot that meets the timeline requirement, and the PUSCH is configured or scheduled for the STxMP, the network device can determine that the PHR reported by the terminal is calculated and reported according to the actual PH and based on the maximum power configuration of the terminal. Therefore, the network device can determine the PH of each panel based on the PHR reported by the terminal having the multiple panels, thereby accurately scheduling resources for each panel and ensuring the reliability of uplink transmission.

FIG. 14 is another block diagram of a communication apparatus according to an embodiment of the present disclosure. The communication apparatus 1400 may be a terminal having multiple panels, a network device, a chip, a chip system, a processor, etc. that supports the terminal having multiple panels to implement the method, or a chip, a chip system, a processor, etc. that supports the network device to implement the method. The apparatus may be used to implement the method in the above method embodiments. For details, please refer to the above method embodiments.

The communication apparatus 1400 may include one or more processors 1401. The processor 1401 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 1400 may also include one or more memories 1402 for storing the computer program 1104. The processor 1401 executes the computer program 1404, to cause the communication apparatus 1400 to implement the method in the above method embodiments. Optionally, the memory 1402 may also store data. The communication apparatus 1400 and the memory 1402 may be set up separately or integrated together.

Optionally, the communication apparatus 1400 may also include a transceiver 1405 and an antenna 1406. The transceiver 1405 may be called a transceiver unit, a transceiver machine, or a transceiver circuit, etc., to implement the receiving and sending function. The transceiver 1405 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 1400 may also include one or more interface circuits 1407. The interface circuit 1407 is used to receive code instructions and transmit the code instructions to the processor 1401. The processor 1401 runs the code instructions to cause the communication apparatus 1400 to implement the method in the above method embodiment.

The communication apparatus 1400 is the terminal having multiple panels. The processor 1401 is configured to execute the step 201 in FIG. 2, the step 301 in FIG. 3, the step 401 in FIG. 4, the step 501 in FIG. 5, the step 602 in FIG. 6. The transceiver 1105 is configured to execute the step 601 in FIG. 6 or the like.

The communication apparatus 1400 is the network device. The transceiver 1405 is configured to execute the step 801 in FIG. 8, and the step 901 in FIG. 9 or the like.

In one implementation, the processor 1401 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1401 may store a computer program 1403. When the computer program 1403 is running on the processor 1401, the communication apparatus 140 is caused to implement the method in the above method embodiments. The computer program 1403 may be solidified in the processor 1401, in which case the processor 1401 may be implemented in hardware.

In an implementation, the communication apparatus 140 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a remote terminal, but the scope of the communication apparatus in the disclosure is not limited to this, and the structure of the communication apparatus may not be restricted by FIG. 11. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

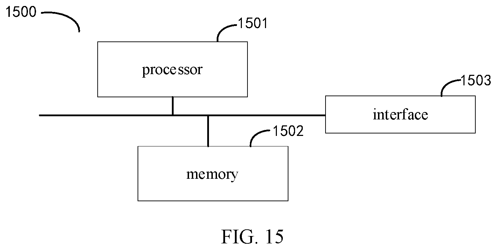

For the case where the communication apparatus may be a chip or a chip system, please refer to the structural diagram of a chip in FIG. 15. The chip shown in FIG. 15 includes a processor 1501 and an interface 1503. There may be one or more processors 1501, and there may be one or more interfaces 1503.

For the situation that the chip is used to perform the functions of the terminal having multiple panels in the embodiments of the present disclosure: the interface 1503 is used to implement the step 601 in the FIG. 6, etc.

For the situation that the chip is used to perform the functions of the network device in the embodiments of the present disclosure: the interface 1503 is used to implement the step 801 in FIG. 8, or the step 901 in FIG. 9, etc.

Optionally, the chip also includes a memory 1503, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A power headroom reporting method based on a multi-panel transmission, performed by a terminal having multiple panels, comprising:
calculating and reporting a power headroom report (PHR) according to an actual power headroom (PH) and based on a maximum power configuration of the terminal, in response to the terminal actually sending a physical uplink shared channel (PUSCH) on a first sending time slot corresponding to the PUSCH for carrying a media access control control unit (MAC CE) PHR or a time slot meeting a timeline requirement, and the PUSCH being configured or scheduled for an uplink simultaneous transmission of multiple panels (STxMP).

2. The method of claim 1, wherein calculating and reporting the PHR according to the actual PH and based on the maximum power configuration of the terminal comprises:
calculating and reporting at least one actual PHR based on a maximum transmit power Pcmax for the terminal, in response to the maximum power configuration of the terminal comprising the maximum transmit power Pcmax; or
calculating and reporting at least one actual PHR based on a maximum transmit power Pcmax,p corresponding to at least one panel, in response to the maximum power configuration of the terminal comprising a maximum transmit power Pcmax,p for each of different panels, where p is a positive integer less than or equal to N, N is a number of the multiple panels in the terminal; or
jointly calculating and reporting at least one actual PHR based on a maximum transmit power Pcmax for the terminal and a maximum transmit power Pcmax,p corresponding to each panel, in response to the maximum power configuration of the terminal comprising the maximum transmit power Pcmax for the terminal and the maximum transmit power Pcmax,p corresponding to each panel.

3. The method of claim 2, wherein calculating and reporting the at least one actual PHR based on the maximum transmit power Pcmax for the terminal comprises:
calculating and reporting an actual PHR of a specified panel according to a power allocation rule and based on the maximum transmit power Pcmax for the terminal, wherein the actual PHR is associated with a transmission occasion corresponding to a PUSCH transmission on the specified panel for which the actual PHR is calculated; or
calculating and reporting actual PHRs of two panels according to a power allocation rule and based on the maximum transmit power Pcmax for the terminal, wherein each of the actual PHRs is associated with a transmission occasion corresponding to a PUSCH transmission on a panel for which the actual PHR is calculated.

4. The method of claim 2, wherein calculating and reporting the at least one actual PHR based on the maximum transmit power Pcmax,p corresponding to the at least one panel comprises:
calculating and reporting an actual PHR corresponding to a specified panel according to a maximum transmit power Pcmax,p corresponding to the specified panel, wherein the actual PHR is associated with a transmission occasion corresponding to a PUSCH transmission on the specified panel for which the actual PHR is calculated; or
calculating and reporting actual PHRs corresponding respectively to two panels according to a maximum transmit power Pcmax,p corresponding to each of the two panels, wherein each of the actual PHRs is associated with a transmission occasion corresponding to a PUSCH transmission on a panel for which the actual PHR is calculated.

5. The method of claim 2, wherein jointly calculating and reporting the at least one actual PHR based on the maximum transmit power Pcmax for the terminal and the maximum transmit power Pcmax,p corresponding to each panel comprises:
calculating and reporting an actual PHR corresponding to a specified panel based on the maximum transmit power Pcmax for the terminal, wherein the actual PHR is associated with a transmission occasion corresponding to a PUSCH transmission on the specified panel for which the actual PHR is calculated; or
calculating and reporting an actual PHR corresponding to a specified panel based on a maximum transmit power Pcmax,p corresponding to the specified panel, wherein the actual PHR is associated with a transmission occasion corresponding to a PUSCH transmission on the specified panel for which the actual PHR is calculated; or
respectively calculating and reporting two actual PHRs corresponding to a specified panel based on the maximum transmit power Pcmax for the terminal and a maximum transmit power Pcmax,p corresponding to the specified panel, wherein the two actual PHRs each are associated with a transmission occasion corresponding to a PUSCH transmission on the specified panel for which the two actual PHRs are calculated; or
calculating and reporting actual PHRs corresponding respectively to two panels based on the maximum transmit power Pcmax for the terminal, wherein each of the actual PHRs is associated with a transmission occasion corresponding to a PUSCH transmission on a panel for which the actual PHR is calculated; or
calculating and reporting actual PHRs corresponding respectively to two panels according to a maximum transmit power Pcmax,p corresponding to each of the two panels, wherein each of the actual PHRs is associated with a transmission occasion corresponding to a PUSCH transmission on a panel for which the actual PHR is calculated; or
calculating and reporting an actual PHR corresponding to the terminal based on the maximum transmit power Pcmax for the terminal, and jointly calculating and reporting two actual PHRs corresponding to a specified panel based on the maximum transmit power Pcmax for the terminal in combination with a maximum transmit power Pcmax,p corresponding to the specified panel of the two panels, wherein the two actual PHRs each are associated with a transmission occasion corresponding to a PUSCH transmission on the specified panel; or
jointly calculating and reporting two actual PHRs corresponding to each of two panels according to the maximum transmit power Pcmax for the terminal and a maximum transmit power Pcmax,p corresponding to each of the two panels, wherein each of the two actual PHRs is associated with a transmission occasion corresponding to a PUSCH transmission on a panel for which the actual PHR is calculated; or
calculating and reporting an actual PHR corresponding to the terminal based on the maximum transmit power Pcmax for the terminal, and jointly calculating and reporting two actual PHRs corresponding to each of two panels based on the maximum transmit power Pcmax for the terminal in combination with a maximum transmit power Pcmax,p corresponding to each panel of the two panels, wherein each actual PHR is associated with a transmission occasion corresponding to a PUSCH transmission on a panel for which the actual PHR is calculated.

6. The method of any of claims 3-5, further comprising:
determining a panel under a predefined rule as the specified panel; or
determining a panel selected by the terminal as the specified panel; or
determining the specified panel according to first indication information sent by a network device.

7. The method of any of claims 1-6, further comprising:
receiving second indication information sent by a network device, wherein the second indication information indicates a PHR reporting mode; and
determining the actual PHR according to the maximum power configuration of the terminal and the PHR reporting mode.

8. The method of claim 7, wherein the PHR reporting mode comprises any one of:
reporting one PHR, reporting two PHRs, reporting three PHRs, reporting four PHRs, or reporting five PHRs.

9. A power headroom reporting method based on a multi-panel transmission, performed by a network device, comprising:
determining that a power headroom report (PHR) reported by a terminal is calculated according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

10. The method of claim 9, wherein determining that the PHR reported by the terminal is calculated according to the actual PH and based on the maximum power configuration of the terminal comprises:
determining that the PHR reported by the terminal is at least one actual PHR calculated based on a maximum transmit power Pcmax for the terminal, in response to the maximum power configuration of the terminal comprising the maximum transmit power Pcmax for the terminal; or
determining that the PHR reported by the terminal is at least one actual PHR calculated based on a maximum transmit power Pcmax,p corresponding to at least one panel, in response to the maximum power configuration of the terminal comprising a maximum transmit power Pcmax,p for each of different panels, where p is a positive integer less than or equal to N, N is a number of the multiple panels in the terminal; or
determining that the PHR reported by the terminal is at least one actual PHR jointly calculated based on a maximum transmit power Pcmax for the terminal and a maximum transmit power Pcmax,p corresponding to each panel, in response to the maximum power configuration of the terminal comprising the maximum transmit power Pcmax for the terminal and the maximum transmit power Pcmax,p corresponding to each panel.

11. The method of claim 10, wherein determining that the PHR reported by the terminal is the at least one actual PHR calculated based on the maximum transmit power Pcmax for the terminal comprises:
determining that the PHR reported by the terminal is an actual PHR of a specified panel calculated according to a power allocation rule and based on the maximum transmit power Pcmax for the terminal, wherein the actual PHR is associated with a transmission occasion corresponding to a PUSCH transmission on the specified panel for which the actual PHR is calculated; or
determining that the PHR reported by the terminal comprises actual PHRs of two panels calculated according to a power allocation rule and based on the maximum transmit power Pcmax for the terminal, wherein each of the actual PHRs is associated with a transmission occasion corresponding to a PUSCH transmission on a panel for which the actual PHR is calculated.

12. The method of claim 10, wherein the reported PHR comprises:
determining that the PHR reported by the terminal is an actual PHR corresponding to a specified panel calculated based on a maximum transmit power Pcmax,p corresponding to the specified panel, wherein the actual PHR is associated with a transmission occasion corresponding to a PUSCH transmission on the specified panel for which the actual PHR is calculated; or
determining that the PHR reported by the terminal comprises actual PHRs corresponding respectively to two panels calculated based on a maximum transmit power Pcmax,p corresponding to each of the two panels, wherein each of the actual PHRs is associated with a transmission occasion corresponding to a PUSCH transmission on a panel for which the actual PHR is calculated.

13. The method of claim 10, wherein determining that the PHR reported by the terminal is the at least one actual PHR jointly calculated based on the maximum transmit power Pcmax for the terminal and the maximum transmit power Pcmax,p corresponding to each panel comprises:
in response to receiving an actual PHR reported by the terminal, determining that the actual PHR is an actual PHR corresponding to a specified panel calculated by the terminal based on the maximum transmit power Pcmax for the terminal, wherein the actual PHR is associated with a transmission occasion corresponding to a PUSCH transmission on the specified panel for which the actual PHR is calculated; or
in response to receiving an actual PHR reported by the terminal, determining that the actual PHR is an actual PHR corresponding to a specified panel calculated by the terminal based on a maximum transmit power Pcmax,p corresponding to the specified panel, wherein the actual PHR is associated with a transmission occasion corresponding to a PUSCH transmission on the specified panel for which the actual PHR is calculated; or
in response to receiving two actual PHRs reported by the terminal, determining that the two actual PHRs are two actual PHRs corresponding to a specified panel calculated respectively by the terminal based on the maximum transmit power Pcmax for the terminal and a maximum transmit power Pcmax,p corresponding to the specified panel, wherein the two actual PHRs each are associated with a transmission occasion corresponding to a PUSCH transmission on the specified panel for which the two actual PHRs are calculated; or
in response to receiving two actual PHRs reported by the terminal, determining that the two actual PHRs are actual PHRs corresponding respectively to two panels calculated respectively by the terminal based on the maximum transmit power Pcmax for the terminal, wherein each of the actual PHRs is associated with a transmission occasion corresponding to a PUSCH transmission on a panel for which the actual PHR is calculated; or
in response to receiving two actual PHRs reported by the terminal, determining that the two actual PHRs are actual PHRs corresponding respectively to two panels calculated respectively and reported by the terminal according to a maximum transmit power Pcmax,p corresponding to each of the two panels, wherein each of the actual PHRs is associated with a transmission occasion corresponding to a PUSCH transmission on a panel for which the actual PHR is calculated; or
in response to receiving three actual PHRs reported by the terminal, determining that the three actual PHRs comprise an actual PHR corresponding to the terminal calculated and reported by the terminal based on the maximum transmit power Pcmax for the terminal and two actual PHRs corresponding to a specified panel jointly calculated and reported by the terminal based on the maximum transmit power Pcmax for the terminal in combination with a maximum transmit power Pcmax,p corresponding to the specified panel of the two panels, wherein the two actual PHRs each are associated with a transmission occasion corresponding to a PUSCH transmission on the specified panel; or
in response to receiving four actual PHRs reported by the terminal, determining that the four actual PHRs comprise two actual PHRs corresponding to each of two panels jointly calculated and reported by the terminal according to the maximum transmit power Pcmax for the terminal and a maximum transmit power Pcmax,p corresponding to each of the two panels, wherein each of the two actual PHRs is associated with a transmission occasion corresponding to a PUSCH transmission on a panel for which the actual PHR is calculated; or
in response to receiving five actual PHRs reported by the terminal, determining that the five actual PHRs comprise an actual PHR corresponding to the terminal calculated and reported by the terminal based on the maximum transmit power Pcmax for the terminal and two actual PHRs corresponding to each of two panels jointly calculated and reported by the terminal based on the maximum transmit power Pcmax for the terminal in combination with a maximum transmit power Pcmax,p corresponding to each panel of the two panels, wherein each actual PHR is associated with a transmission occasion corresponding to a PUSCH transmission on a panel for which the actual PHR is calculated.

14. The method of any of claims 11-13, further comprising:
determining a panel under a predefined rule as the specified panel; or
determining a panel selected by the terminal as the specified panel; or
sending first indication information to the terminal, wherein the first indication information indicates the terminal to report the actual PHR of the specified panel.

15. The method of any of claims 9-14, further comprising:
sending second indication information to the terminal, wherein the second indication information indicates a PHR reporting mode.

16. The method of claim 15, wherein the PHR reporting mode comprises any one of:
reporting one PHR, reporting two PHRs, reporting three PHRs, reporting four PHRs, or reporting five PHRs.

17. A communication apparatus, applicable to a terminal having multiple panels, comprising:
a processing module, configured to calculate and report a power headroom report (PHR) according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

18. A communication apparatus, applicable to a network device, comprising:
a processing module, configured to determine that a power headroom report (PHR) reported by a terminal is calculated according to an actual power headroom (PH) and based on a maximum power configuration of the terminal, in response to the terminal actually sending a physical uplink shared channel (PUSCH) on a first sending time slot corresponding to the PUSCH for carrying a media access control control unit MAC CE PHR or a time slot meeting a timeline requirement, and the PUSCH being configured or scheduled for an uplink simultaneous transmission of multiple panels (STxMP).

19. A communication apparatus, comprising a processor and a memory for storing a computer program, wherein when the computer program stored in the memory is executed by the processor, the apparatus is caused to implement the method of any one of claims 1 to 8, or to implement the method of any one of claims 9 to 16.

20. A computer-readable storage medium for storing instructions, wherein when the instructions are executed, the method of any one of claims 1 to 8 or the method of any one of claims 9 to 16 is implemented.
